# EUROPEAN PATENT APPLICATION

(11) **EP 2 116 465 A1**
(43) Date of publication of application: **11.11.2009**
(21) Application number: 09151176.6
(22) Date of filing: 23.01.2009
(51) Int. Cl.: B62M 9/12

(54) **Apparatus for positioning a derailleur on a bicycle frame**

(30) Priority: 09.05.2008 US 117998
(71) Applicant: SHIMANO INC., Osaka 590-8577 (JP)
(72) Inventor: Yamaguchi, Souta, SAKAI CITY, OSAKA 590-8577 (JP)
(74) Representative: Intes, Didier Gérard André

(57) **Abstract**

An apparatus for positioning a derailleur on a bicycle frame comprises a base member (108) for the derailleur, wherein the base member includes a first portion (186) structured to be attached to a bicycle frame; a second portion (198) structured to be attached to the bicycle frame, wherein the second portion is located away from the first portion; and a third portion (190, 194) structured to support a linkage mechanism. The first portion, the second portion and the third portion are structured so that the linkage mechanism as a unit is prevented from rotating clockwise, when viewed along the rotational axis from a laterally outer side of the derailleur, when the first portion and the second portion are attached to the bicycle frame.

## Description

### BACKGROUND OF THE INVENTION

The present invention is directed to bicycles and, more particularly, to a bicycle derailleur with structures for positioning the derailleur on a bicycle frame.

A bicycle rear derailleur engages a driving chain on one of a plurality of sprockets mounted on the rear wheel hub. A conventional rear derailleur comprises a base member detachably fastened to the back end of the frame, a chain guide for guiding the chain onto the plurality of sprockets, a movable member that pivotably supports the chain guide, and a link mechanism that movably supports the movable member relative to the base member. When the bicycle is being driven on a rough road, vibration may cause the base member to pivot, thereby upsetting the position of the chain guide relative to the plurality of sprockets and possibly causing the derailleur to malfunction.

### SUMMARY OF THE INVENTION

The present invention is directed to various features of a bicycle derailleur apparatus. In one embodiment, an apparatus for positioning a derailleur, in particular a rear derailleur, on a bicycle frame comprises a base member for the derailleur, wherein the base member includes a first portion structured to be attached to a bicycle frame; a second portion structured to be attached to the bicycle frame, wherein the second portion is located away from the first portion; and a third portion structured to support a linkage mechanism. The first portion, the second portion and the third portion are structured so that the linkage mechanism as a unit is prevented from rotating clockwise, when viewed along the rotational axis from a laterally outer side of the derailleur, when the first portion and the second portion are attached to the bicycle frame. Additional inventive features will become apparent from the description below, and such features alone or in combination with the above features may form the basis of further inventions as recited in the claims and their equivalents.

### BRIEF DESCRIPTION OF THE DRAWINGS

Fig. 1 is a side view of a particular embodiment of a bicycle;
Fig. 2 is a more detailed side view of a particular embodiment of a rear derailleur mounted to the bicycle frame;
Fig. 3 is a rear view of the derailleur;
Fig. 4A is a side view of a particular embodiment of a base member for the derailleur;
Fig. 4B is a rear view of the base member; and
Fig. 4C is an upper oblique view of the base member.

### DETAILED DESCRIPTION OF THE EMBODIMENTS

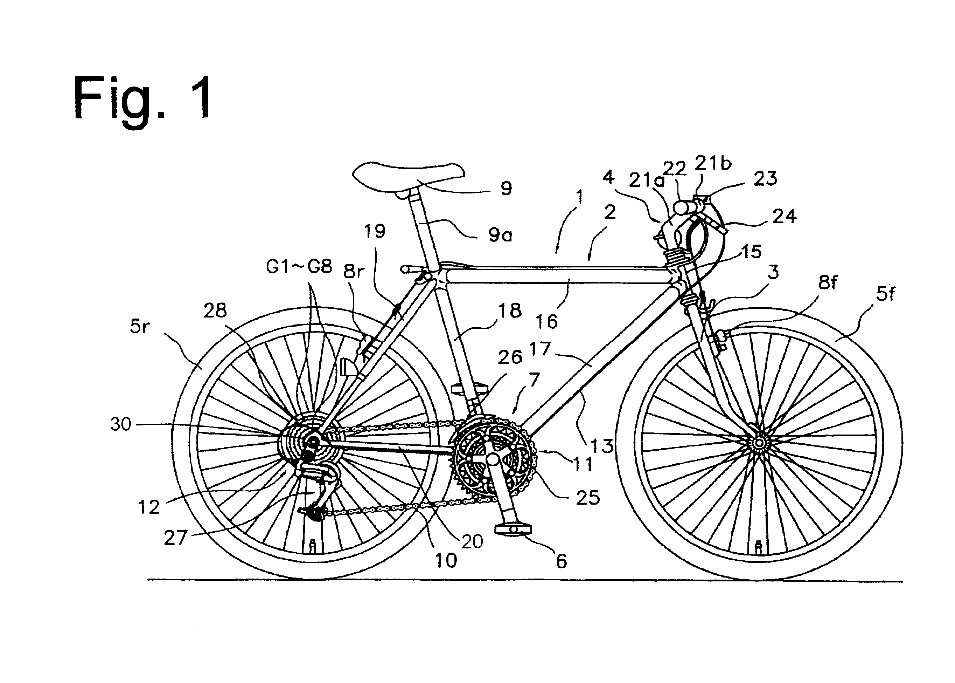

Fig. 1 is a side view of a particular embodiment of a bicycle 1. Bicycle 1 includes a diamond-shaped frame body 2, a front fork 3, a handlebar unit 4, a front wheel 5f, a rear wheel 5r, a drive unit 7 for transferring rotation of pedals 6 to rear wheel 5r, a front brake unit 8f and a rear brake unit 8r.

Frame body 2 (bicycle frame) comprises front and rear triangular portions, wherein front triangular portion comprises a head tube 15, a top tube 16, a down tube 17, and a seat tube 18. Fork 3 is mounted to head tube 15 for rotation around an inclined axis. Handlebar unit 4 is mounted to the upper portion of fork 3, and front wheel 5f is rotatably mounted to the lower portion of fork 3. Handlebar unit 4 comprises a handle stem 21 a and a handlebar 21 b mounted to the top of handlebar stem 21 a, wherein handle stem 21 a is mounted to the top of front fork 3. Handlebar 21 b is equipped with a pair of left and right grips 22, a pair of left and right shift control units 23, and a pair of left and right brake controllers 24. A vertically adjustable seat post 9a with a saddle 9 mounted thereon is mounted in the upper portion of seat tube 18, and a forward portion of drive unit 7 is rotatably mounted at the lower portion of seat tube 18.

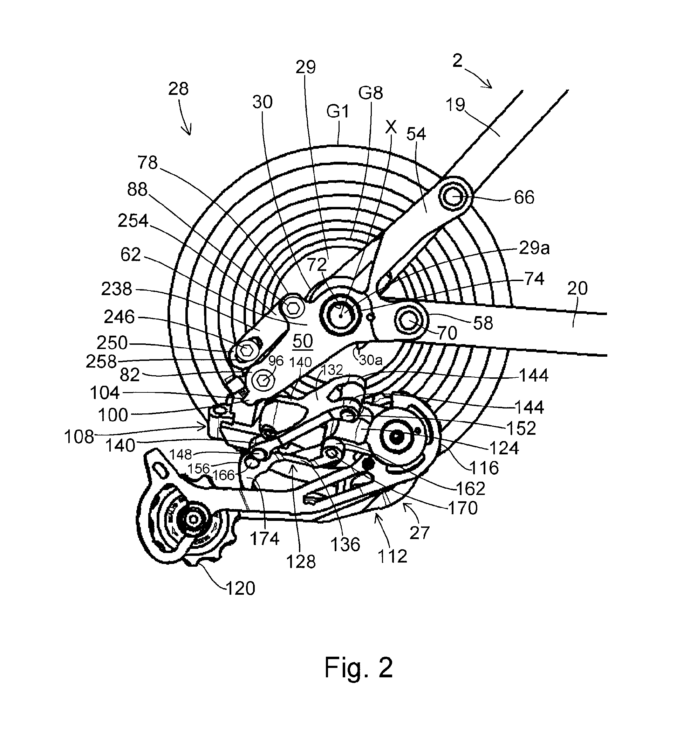

The rear triangular portion of frame body 2 comprises seat tube 18, a pair of seatstays 19 and a pair of chainstays 20. The back ends of seatstays 19 and chainstays 20 are connected by rear dropout portions 30, and rear wheel 5r is mounted to these rear dropout portions 30. As shown in Fig. 2, each rear dropout portion 30 includes a mounting slot 30a for installing a hub axle 29a of a rear hub 29 of rear wheel 5r.

Drive portion 7 has a chain 10 and front and rear external gearshift devices 11 and 12. Front external gearshift device 11 is disposed at a bottom bracket portion of seat tube 18, and it includes a gear crank 25 and a front derailleur 26. Gear crank 25 may have a plurality of (e.g., three) sprockets with different numbers of teeth. Front derailleur 26 is operatively coupled to one of the shift control devices 23 through a shift cable assembly in the form of a Bowden cable (not shown), and front derailleur 26 engages chain 10 with one of the three sprockets disposed on gear crank 5 in response to the operation of that shift control device 23.

Rear external gearshift device 12 comprises a rear derailleur 27 and a gear cluster 28 including a plurality of (e.g., eight) sprockets G1-G8 with different numbers of teeth mounted on rear hub 29. Sprockets G1-G8 rotate around a rotational axis X. Rear derailleur 27 is operatively coupled to one of the shift control devices 23 through a shift cable assembly 13 in the form of a Bowden cable, and rear derailleur 27 engages chain 10 with one of the sprockets G1-G8 in response to the operation of that shift control device 23.

As shown in Fig. 2, rear derailleur 27 in this embodiment is coupled to frame body 2 through a derailleur adapter 50. Derailleur adapter 50 includes an upper fork 54, a lower fork 58, and a main body 62. Upper fork 54 is coupled to the right-side seat stay 19 through a bolt 66 or through some other means, lower fork 58 is coupled to the right-side chain stay 20 through a bolt 70 or through some other means, and main body 62 includes an opening 72 for coupling main body 62 to the right-side dropout portion 30 through hub axle 29a and an axle nut 74. In order to prevent damage or deformation to other components of frame body 2, derailleur adapter 50 may be less rigid than other components and may be designed to be replaceable if damaged.

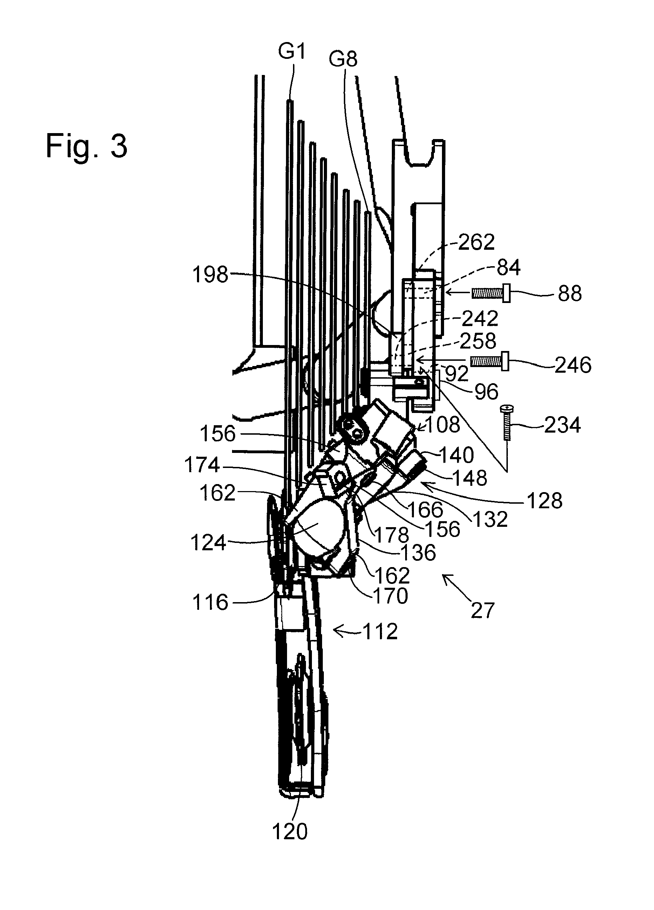

Main body 62 includes an auxiliary connecting element mounting portion 78 and a base member mounting portion 82. Auxiliary connecting element mounting portion 78 has the form of a protuberance that bulges out from the adjacent side surface, and auxiliary connecting element mounting portion 78 includes an opening 84 (Fig. 3) for receiving a mounting bolt 88 therethrough. Base member mounting portion 82 is an elongated portion that extends rearwardly and downwardly from auxiliary connecting element mounting portion 78. Base member mounting portion 82 includes an opening 92 (Fig. 3) for receiving a derailleur mounting bolt 96 therethrough and a protuberance 100 for forming a positioning abutment 104.

As shown in Figs. 2 and 3, rear derailleur 27 comprises a base member 108, a chain guide 112 that rotatably supports a guide pulley 116 and a tension pulley 120 for guiding the chain onto the plurality of sprockets G1-G8, a movable member 124 that pivotably supports chain guide 112, and a link mechanism 128 that movably supports movable member 124 relative to base member 108. Link mechanism 128 comprises an upper link member 132 and a lower link member 136. Upper link member 132 includes a pair of link mounting arms 140 and a pair of link mounting arms 144. Link mounting arms 140 straddle base member 108 for pivotably coupling upper link member 132 to base member 108 through a pivot shaft 148, and link mounting arms 144 straddle movable member 124 for pivotably coupling upper link member 132 to movable member 124 through a pivot shaft 152. Similarly, lower link member 136 includes a pair of link mounting arms 156 and a pair of link mounting arms 162 (only one of each link mounting arm 156 and 162 is shown in Fig. 2). Link mounting arms 156 straddle base member 108 as shown in Fig. 3 for pivotably coupling lower link member 136 to base member 108 through a pivot shaft 166, and link mounting arms 162 straddle movable member 124 for pivotably coupling lower link member 136 to movable member 124 through a pivot shaft 170. Lower link member 136 also includes an actuating arm 174 with a cable mount 178 for attaching the inner cable of shift cable assembly 13 through a typical bolt and clamping washer (not shown).

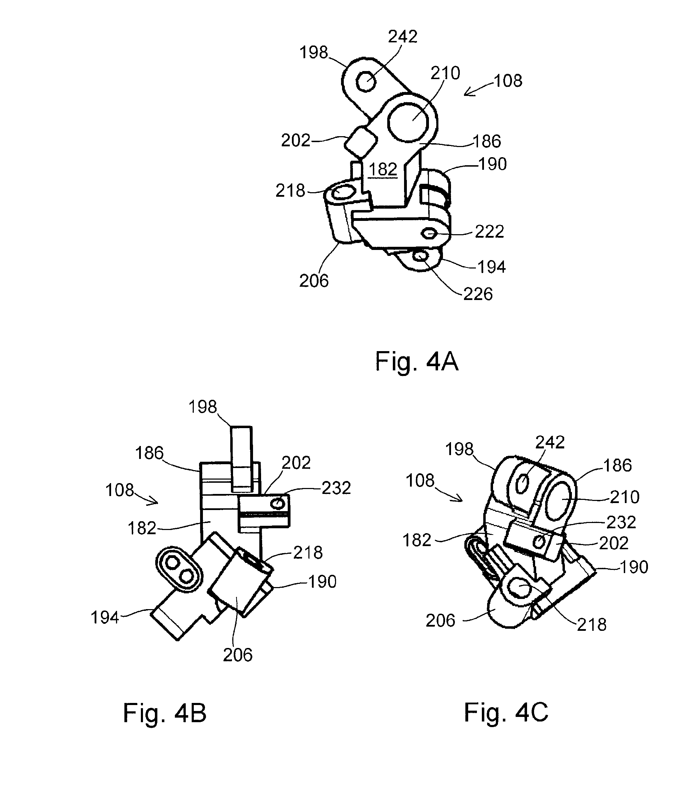

As shown in Figs. 4A-4C, base member 108 comprises a main body 182, a frame mounting portion 186 (first portion), a third portion comprising an upper link mounting portion 190 and a lower link mounting portion 194, an auxiliary connecting element mounting portion 198 (second portion), an adjusting element mounting portion 202, and a cable casing terminating portion 206. In this embodiment, all of the portions of base member 108 together form a one-piece member.

Frame mounting portion 186 is structured to be attached to derailleur adapter 50 by a fastener. More specifically, frame mounting portion 186 includes a threaded opening 210 for receiving derailleur mounting bolt 96 (Fig. 2) therein so that base member 108 may be attached to frame body 2 through derailleur adapter 50. Cable casing terminating portion 206 is formed as a generally cylindrical member with an opening 218 structured to terminate the outer casing of shift cable assembly 13 in a known manner.

In this embodiment, upper link mounting portion 190 is structured to directly mount link mounting arms 140 of upper link member 132 to base member 108 as noted above (e.g., by being sandwiched between link mounting arms 140). For this purpose, upper link mounting portion 190 includes an opening 222 for receiving pivot shaft 148 therethrough. Similarly, lower link mounting portion 194 is structured to directly mount link mounting arms 156 of lower link mounting member 136 to base member 108 as noted above (e.g., by being sandwiched between link mounting arms 156). For this purpose, lower link mounting portion 194 includes an opening 226 for receiving pivot shaft 166 therethrough.

Adjusting element mounting portion 202 extends and projects laterally from main body 182 as shown in Fig. 4B. Adjusting element mounting portion 202 includes a threaded opening 232 for receiving an adjusting screw 234 therethrough. Opening 232 is positioned so that the end of adjusting screw 234 abuts against positioning abutment 104 on protuberance 100 of derailleur adapter 50. As a result, the rotational position of base member 108, and hence derailleur 27, may be adjusted by rotating adjusting screw 234.

In this embodiment, auxiliary connecting element mounting portion 198 is located away from frame mounting portion 186 and is also structured to be attached to frame body 2. More specifically, in this embodiment auxiliary connecting element mounting portion 198 is structured to be mounted to frame body 2 through an auxiliary connecting element 238. For this purpose, auxiliary connecting element mounting portion 198 includes a threaded opening 242 located away from opening 210 in frame mounting portion 186, wherein opening 242 is dimensioned for receiving a mounting bolt 246 (Fig. 2) therein.

As shown in Figs. 2 and 3, in this embodiment auxiliary connecting element 238 is structured as a connecting link in the form of an elongated flat planar oval plate. Auxiliary connecting element 238 has a first end portion 250 and a second end portion 254. First end portion 250 has a first opening 258 in the form of an elongated slot dimensioned to receive mounting bolt 246 therethrough, and second end portion 254 has a threaded second opening 262 (Fig. 3) dimensioned to receive mounting bolt 88 therein. First opening 258 is shaped to accommodate a plurality of rotational positions of base member 108 relative to derailleur adapter 50 when derailleur 27 is attached to frame body 2, and more particularly when frame mounting portion 186 of base member 108 is mounted to base member mounting portion 82 of derailleur adapter 50, and when auxiliary connecting element mounting portion 198 of base member 108 is mounted to derailleur adapter 50 through auxiliary connecting element 238.

To mount derailleur 27 to frame body 2, base member 108 is attached with slight friction to base member mounting portion 82 of derailleur adapter 50 by passing derailleur mounting bolt 96 through base member mounting portion 82 of derailleur adapter 50 and then by threading mounting bolt 96 into threaded opening 210 of frame mounting portion 186 of base member 108. The rotational position of base member 108 relative to derailleur adapter 50 is adjusted by rotating adjusting screw 234, and then derailleur mounting bolt 96 is securely tightened. Then, first opening 258 in auxiliary connecting element 238 is aligned with opening 242 in auxiliary connecting element mounting portion 198 of base member 108, and second opening 262 in auxiliary connecting element 238 is aligned with opening 84 in auxiliary connecting element mounting portion 78 of derailleur adapter 50. Mounting bolt 246 is passed through first opening 258 in auxiliary connecting element 238 and firmly screwed into threaded opening 242 in auxiliary connecting element mounting portion 198 of base member 108, and mounting bolt 88 is passed through opening 84 in auxiliary connecting element mounting portion 78 of derailleur adapter and firmly screwed into threaded second opening 262 in auxiliary connecting element 238. As a result, base member 108 is prevented from rotating either clockwise or counterclockwise (when viewed along rotational axis X from a laterally outer side of derailleur 27) even when the bicycle is driven on a rough road, and linkage mechanism 128 as a unit is prevented from rotating either clockwise or counterclockwise when so viewed to prevent undesirable movement of chain guide 112 that could cause derailleur 27 to malfunction.

While the above is a description of various embodiments of inventive features, further modifications may be employed without departing from the scope of the present invention. For example, while first opening 258 in auxiliary connecting element 238 was shaped as a straight slot in the described embodiment, in some cases first opening 258 may have an arcuate shape, a stepped shape, or some other shape depending upon the application. Second opening 262 in auxiliary connecting element 238 also could have a slotted shape. While first opening 258 was formed as a continuous slot, first opening 258 could be formed as multiple openings, whether continuous or discontinuous. While derailleur adapter 50 allows derailleur 27 to be attached to different configurations of frame body 2, derailleur adapter 50 may be omitted, and frame body 2 may be formed with structures that substitute for or incorporate auxiliary connecting element mounting portion 78 and/or auxiliary connecting element 238. For example, rear dropout portion 30 could be formed with an auxiliary connecting element mounting portion, or rear dropout portion 30 could be formed with a projection (e.g., an arcuate projection) capable of reaching auxiliary connecting element mounting portion 198 of base member 108. In that case, the auxiliary connecting element is formed as one piece with rear dropout portion 30. Auxiliary connecting element mounting portion 198 of base member 108 could be formed as an elongated member (i.e., with an integrally formed auxiliary connecting element) that attaches directly or indirectly to derailleur adapter 50 or to rear dropout portion 30 with or without further auxiliary connecting elements. While auxiliary connecting element 238 was formed with first opening 258 and second opening 262 to connect auxiliary connecting element 238 to auxiliary connecting element mounting portion 198 of base member 108 and to auxiliary connecting element mounting portion 78 of derailleur adapter 50, respectively, many other connecting structures could be employed. For example, auxiliary connecting element 238 could be formed with a plurality of projecting connecting pins that selectively fit into opening 84 in auxiliary connecting element mounting portion 78 of derailleur adapter 50 and into opening 242 in auxiliary connecting element mounting portion 198 of base member 108. Auxiliary connecting element 238 could be structured to operate according to the theory of a turnbuckle. An adjusting screw could be disposed at first end portion 250 of auxiliary connecting element 238 to abut against the shank of mounting bolt 246 or to abut against some other structure to further prevent movement of base member 108 relative to auxiliary connecting element 238 and/or to help set the rotational position of base member 108 when adjusting screw 232 or positioning abutment 104 is not provided, or for some other reason. Similarly, an adjusting screw could be disposed at second end portion 254 of auxiliary connecting element 238 in addition to or in place of mounting bolt 88 to perform adjusting and/or connecting functions.

The size, shape, location or orientation of the various components may be changed as desired. Components that are shown directly connected or contacting each other may have intermediate structures disposed between them. Separate components may be combined, and vice versa. The functions of one element may be performed by two, and vice versa. The function of one element may be performed by another, and functions may be interchanged among the elements. The structures and functions of one embodiment may be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Terms of degree such as "substantially," "about" and "approximately" as used herein include a reasonable amount of deviation of the modified term such that the end result is not significantly changed. For example, such terms may include a deviation of at least ± 5% of the modified term as long as such a deviation would not negate the meaning of the word it modifies. Thus, the scope of the invention should not be limited by the specific structures disclosed or the apparent initial focus or emphasis on a particular structure or feature.

## Claims

1. An apparatus for positioning a derailleur (27) on a bicycle frame (2), wherein the derailleur is for switching a bicycle chain (10) among a plurality of sprockets (G1 - G8) that rotate around a rotational axis (x), the apparatus being **characterized in that** it comprises:
a base member (108) for the derailleur (27), wherein the base member includes:
a first portion (186) structured to be attached to a bicycle frame;
a second portion (198) structured to be attached to the bicycle frame, wherein the second portion is located away from the first portion; and
a third portion (190, 194) structured to support a linkage mechanism (128);
wherein the first portion, the second portion and the third portion are structured so that the linkage mechanism (128) as a unit is prevented from rotating clockwise, when viewed along the rotational axis from a laterally outer side of the derailleur (27), when the first portion and the second portion are attached to the bicycle frame.

2. The apparatus according to claim 1, wherein the first portion (186), the second portion (198), and the third portion together are one piece.

3. The apparatus according to claim 1 or 2, wherein the first portion, the second portion and the third portion are structured so that the linkage mechanism (128) as a unit is prevented from rotating counterclockwise, when viewed along the rotational axis, when the first portion and the second portion are attached to the bicycle frame.

4. The apparatus according to any one of claims 1 to 3, wherein the third portion (190, 194) includes a link mounting portion for directly attaching a link of the linkage mechanism.

5. The apparatus according to any one of claims 1 to 4, further comprising a position adjusting mechanism (202) that adjusts a rotational position of the base member (108) relative to the bicycle frame.

6. The apparatus according to claim 5, wherein the position adjusting mechanism (202) comprises an adjusting screw (234) supported by the base member and having an abutment (104) for abutting against the bicycle frame.

7. The apparatus according to any one of claims 1 to 6, wherein the first portion (186) is structured to be attached to the bicycle frame (2) by a fastener.

8. The apparatus according to claim 7, wherein the first portion (186) is structured to be attached to the bicycle frame by a bolt (96) that extends through the first portion.

9. The apparatus according to any one of claims 1 to 8, further comprising a connecting link (238) for connecting the second portion to the bicycle frame.

10. The apparatus according to claim 9, wherein the connecting link (238) is structured to be attached to the second portion by a first fastener.

11. The apparatus according to claim 9 or 10, wherein the connecting link (238) includes a first opening (258) for receiving the first fastener therethrough.

12. The apparatus according to claim 11, wherein the first opening (258) has the shape of an elongated slot structured to accommodate a plurality of rotational positions of the base member (108) relative to the bicycle frame when the first portion (186) is attached to the bicycle frame and the second portion (198) is attached to the bicycle frame through the connecting link (238).

13. The apparatus according to claim 12, wherein the connecting link (238) has a first end portion (250) and a second end portion (254), wherein the first opening is disposed at the first end portion, and wherein a second end portion is structured to be attached to the bicycle frame by a second fastener (88).

14. The apparatus according to claim 13 wherein the second end portion (254) includes a second opening (262) for receiving the second fastener (88) therethrough.
